# EUROPEAN PATENT APPLICATION

(11) **EP 2 928 232 A1**
(43) Date of publication of application: **07.10.2015**
(21) Application number: 13858858.7
(22) Date of filing: 15.11.2013
(51) Int. Cl.: H04W 28/02, H04W 80/02

(54) **MOBILE COMMUNICATION METHOD AND MOBILE STATION**

(30) Priority: 28.11.2012 JP 2012259521
(71) Applicant: NTT Docomo, Inc., Tokyo 100-6150 (JP)
(72) Inventor: UCHINO, Tooru, Tokyo 100-6150 (JP); HANAKI, Akihito, Tokyo 100-6150 (JP)
(74) Representative: Hoffmann Eitle
(86) International application number: PCT/JP2013/080856
(87) International publication number: WO 2014/084062

(57) **Abstract**

The present invention avoids a situation where PDCCH and PUSCH resources for transmitting a "PDCP status report" are wasted, even when a "PDCP re-establishment procedure" is started. A mobile communication method of the present invention comprises the steps of: causing a mobile station UE to discard a "PDCP status report #1" and generate a "PDCP status report #2" when detecting a start trigger for a "PDCP re-establishment" again before completing transmission of the "PDCP status report #1"; and causing the mobile station UE to transmit the "PDCP status report #2" to a radio base station eNB after completing the "PDCP re-establishment".

## Description

### TECHNICAL FIELD

The present invention relates to a mobile communication method and a mobile station.

### BACKGROUND ART

In LTE (Long Term Evolution), a transmitting-side PDCP (Packet Data Convergence Protocol) layer function (PDCP entity) is configured to perform ciphering processing (processing for header compression and integrity protection/verification processing) on a PDCP-SDU (Service Data Unit) received from an upper layer function, by using a COUNT value. The transmitting-side PDCP layer function sends a RLC (Radio Link Control) layer function the resultant PDCP-SDU with a PDCP-SN (Sequence Number) assigned thereto, as a PDCP-PDU (Packet Data Unit).

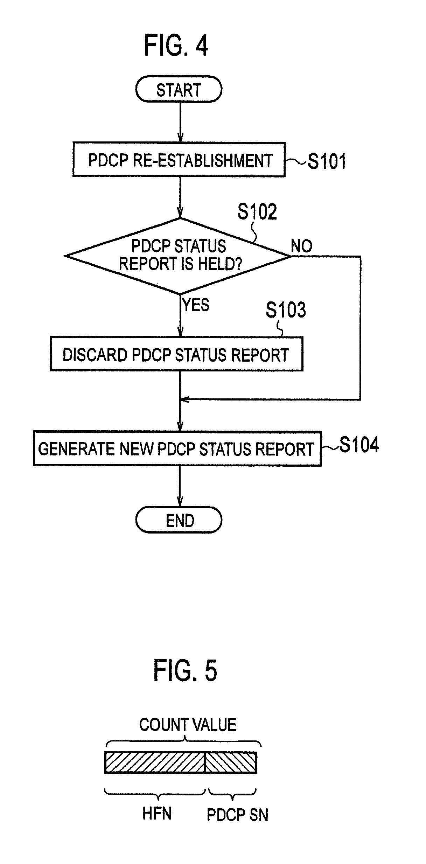

As shown in Fig. 5, the COUNT value is composed of a HFN (Hyper Frame Number) and the PDCP-SN.

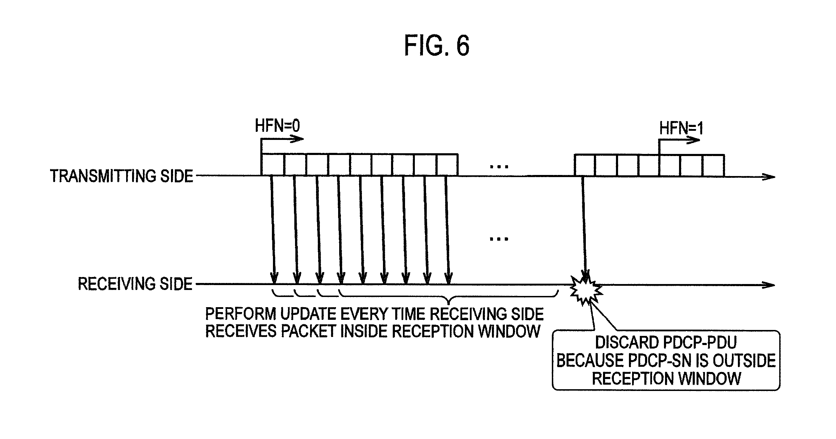

A receiving-side PDCP layer function is configured to manage a reception window and discard a received PDCP-PDU when the PDCP-SN assigned to the received PDCP-PDU is outside the reception window as shown in Fig. 6.

On the other hand, when the PDCP-SN assigned to the received PDCP-PDU is inside the reception window, the receiving-side PDCP layer function estimates the HFN to be used in deciphering processing of the received PDCP-PDU from the current reception state and the PDCP-SN assigned to the received PDCP-PDU, transmits the PDCP-SDU obtained by performing the deciphering processing of the PDCP-PDU to the upper layer function, and updates the reception window.

Moreover, in LTE, the transmitting-side PDCP layer function is configured to perform retransmission from a PDCP-PDU for which ACK is not confirmed in a RLC layer, when handover or re-establishment (for example, RLF) occurs, in order to suppress unnecessary retransmission and prevent a decrease of resource usage efficiency.

Meanwhile, if handover or re-establishment is performed, the receiving-side PDCP layer function can use a "PDCP status report" to suppress unnecessary retransmission of the PDCP-PDU from the transmitting-side PDCP layer function after the handover or re-establishment.

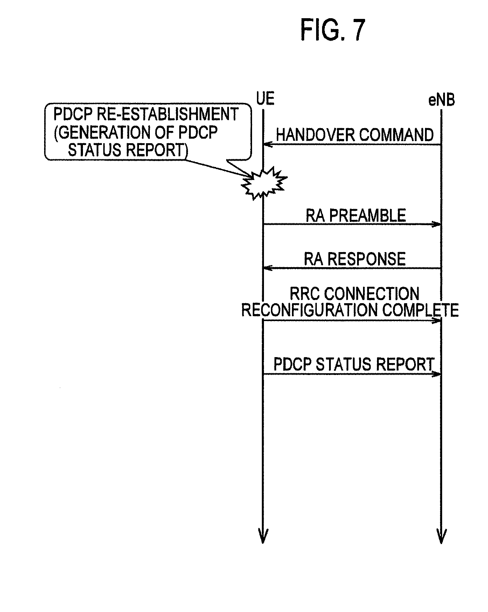

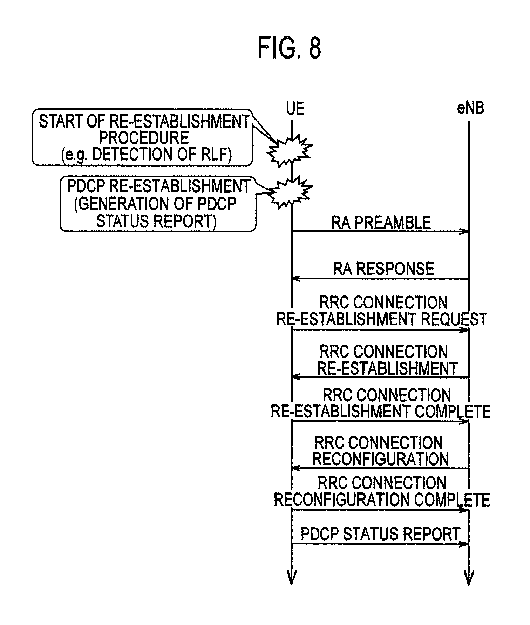

Fig. 7 shows an operation of transmitting the "PDCP status report" when the handover is performed, and Fig. 8 shows an operation of transmitting the "PDCP status report" when the re-establishment is performed.

### PRIOR ART DOCUMENT

### NON-PATENT DOCUMENT

Non-patent document 1: 3GPP 36.323

### SUMMARY OF THE INVENTION

In a conventional method in LTE, a mobile station UE generates a "PDCP status report #1" when detecting a start trigger for "PDCP re-establishment" (start trigger for handover or re-establishment).

Thereafter, when the mobile station UE detects the start trigger for "PDCP re-establishment" again before transmission of the "PDCP status report #1", there is a possibility that the mobile station UE may transmit the old "PDCP status report #1".

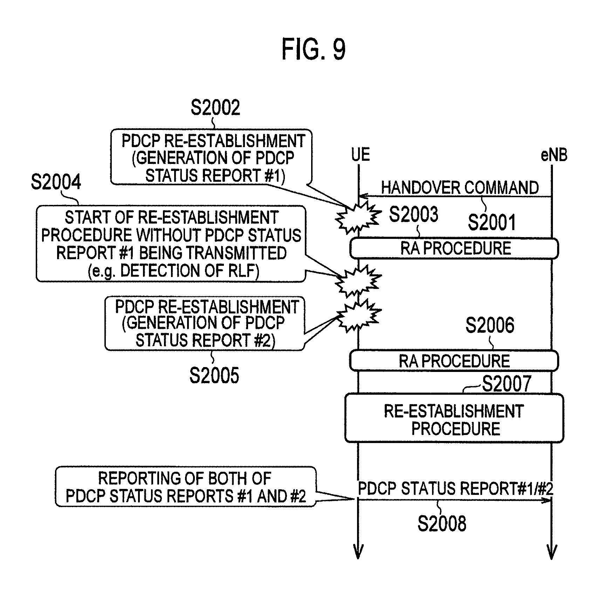

Such a situation is described below with reference to Fig. 9.

As shown in Fig. 9, when the mobile station UE receives a "handover command" from a radio base station eNB in step S2001, the mobile station UE detects the start trigger for the "PDCP re-establishment", starts the "PDCP re-establishment procedure", and generates the "PDCP status report #1" in step S2002.

In step S2003, the mobile station UE starts a RA (Random Access) procedure with the radio base station eNB.

Before the RA procedure is completed, the mobile station UE yet to transmit the "PDCP status report #1" detects the start trigger for the "PDCP re-establishment" (for example, RLF) again in step S2004. Then, the mobile station UE starts the "PDCP re-establishment procedure" in step S2005 to generate a "PDCP status report #2".

The mobile station UE starts the RA procedure with the radio base station eNB in step S2006. When the RA procedure is successful, the mobile station UE starts the "PDCP re-establishment procedure" with the radio base station eNB in step S2007.

When the "PDCP re-establishment procedure" is successful, the mobile station UE transmits both of the "PDCP status report #1" and the "PDCP status report #2" in step S2008.

As a result, PDCCH (Physical Downlink Control Channel) and PUSCH (Physical Uplink Shared Channel) resources for transmitting both of the "PDCP status report #1" and the "PDCP status report #2" are wasted. Hence, such resource usage is a problem because it is undesirable from the viewpoint of resource usage efficiency.

The present invention has been made in view of the problem described above, and an objective thereof is to provide a mobile communication method and a mobile station which can avoid a situation where the PDCCH and PUSCH resources for transmitting the "PDCP status report" are wasted, even when a "PDCP re-establishment procedure" is started.

A first feature of the present invention is summarized as a mobile communication method including the steps of: causing a mobile station to generate a first PDCP status report when detecting a start trigger for a re-establishment procedure in a PDCP layer; causing the mobile station to discard the first PDCP status report and generate a second PDCP status report, when detecting the start trigger for the re-establishment procedure in the PDCP layer again before completing transmission of the first PDCP status report; and causing the mobile station to transmit the second PDCP status report to a radio base station after completing the re-establishment procedure in the PDCP layer.

A second feature of the present invention is summarized as a mobile station including: a generation unit configured to generate a PDCP status report when a start trigger for a re-establishment procedure in a PDCP layer is detected; and a transmission unit configured to transmit the PDCP status report to a radio base station after the re-establishment procedure in the PDCP layer is completed. Here, when the start trigger for the re-establishment procedure in the PDCP layer is detected again before transmission of a generated first PDCP status report is completed, the generation unit discards the first PDCP status report and generates a second PDCP status report, and the transmission unit transmits the second PDCP status report to the radio base station after the re-establishment procedure in the PDCP layer is completed.

### BRIEF DESCRIPTION OF THE DRAWINGS

[Fig. 1] Fig. 1 is an overall configuration diagram of a mobile communication system in a first embodiment of the present invention.
[Fig. 2] Fig. 2 is a functional block diagram of a mobile station UE in the first embodiment of the present invention.
[Fig. 3] Fig. 3 is a sequence diagram showing operations of the mobile communication system in the first embodiment of the present invention.
[Fig. 4] Fig. 4 is a flowchart showing operations of the mobile station UE in the first embodiment of the present invention.
[Fig. 5] Fig. 5 is a view for explaining a conventional art.
[Fig. 6] Fig. 6 is a view for explaining the conventional art.
[Fig. 7] Fig. 7 is a view for explaining the conventional art.
[Fig. 8] Fig. 8 is a view for explaining the conventional art.
[Fig. 9] Fig. 9 is a view for explaining the conventional art.

### MODE FOR CARRYING OUT THE INVENTION

### (Mobile Communication System in First Embodiment of Present Invention)

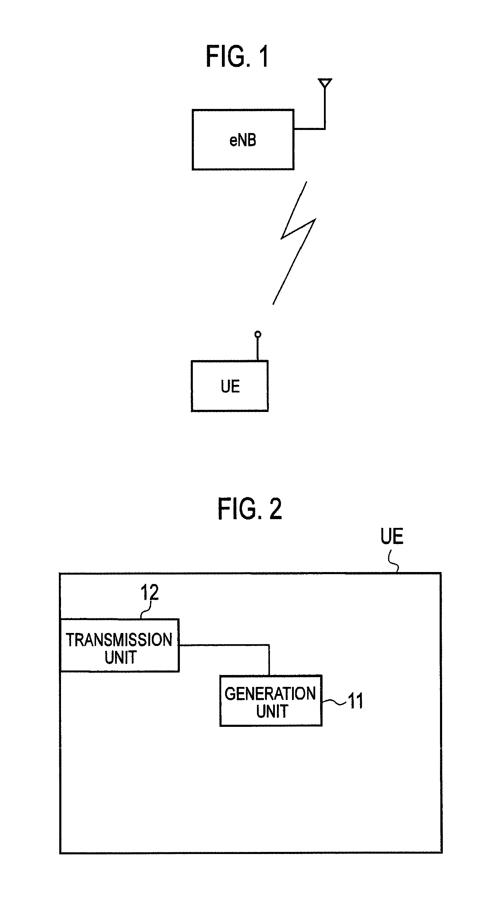

A mobile communication system of a first embodiment of the present invention is described with reference to Figs. 1 to 4.

The mobile communication system of the embodiment is a LTE mobile communication system and includes a radio base station eNB and a mobile station UE as shown in Fig. 1.

In the mobile communication system of the embodiment, the mobile station UE is assumed to be in a RRC_Connected state in a cell under the radio base station eNB.

The mobile station UE in the embodiment has a physical layer function, a RLC layer function, a PDCP layer function, and a RRC layer function.

As shown in Fig. 2, the mobile station UE in the embodiment includes a generation unit 11 and a transmission unit 12 as the PDCP layer function.

The generation unit 11 is configured to generate a "PDCP status report" when a start trigger for a "PDCP re-establishment procedure" is detected.

The generation unit 11 may be configured to determine that the start trigger for the "PDCP re-establishment procedure" is detected when the mobile station UE receives a "handover command" from the radio base station eNB, when the mobile station UE detects a RLF in a radio link between the mobile station UE and the radio base station eNB, or when a similar situation occurs.

The "PDCP status report" is configured to include, for example, a "FMS (First Missing Sequence number)", a "Bitmap", and the like.

The "FMS" shows a PDCP-SN assigned to the oldest PDCP-PDU which has not been received yet in a reception-side PDCP layer function, and the "Bitmap" is a bitmap (0/1) reporting a reception status of a PDCP-PDU following the FMS.

The transmission unit 12 is configured to transmit various signals to the radio base station eNB. For example, the transmission unit 12 is configured to transmit the "PDCP status report" to the radio base station eNB (specifically, RLC layer function).

In the embodiment, the transmission unit 12 is configured as follows. When the mobile station UE is in the RRC_Connected state in the cell under the radio base station eNB and the generation unit 11 detects the start trigger for the "PDCP re-establishment procedure", the transmission unit 12 transmits the "PDCP status report" generated by the generation unit 11 to the radio base station eNB (specifically, RLC layer function) after the "PDCP re-establishment procedure" is completed.

Moreover, the generation unit 11 is configured as follows. When the start trigger for the "PDCP re-establishment procedure" is detected again before the transmission unit 12 completes transmission of a generated "PDCP status report #1", the generation unit 11 discards the "PDCP status report #1" and generates a "PDCP status report #2".

Specifically, the generation unit 11 is configured as follows. When the start trigger for the "PDCP re-establishment" (for example, RLF) is detected, the generation unit 11 determines whether the mobile station UE holds a "PDCP status report" which is not transmitted yet. When the generation unit 11 determines that the mobile station UE holds such a "PDCP status report", the generation unit 11 discards the "PDCP status report" and generates a new "PDCP status report".

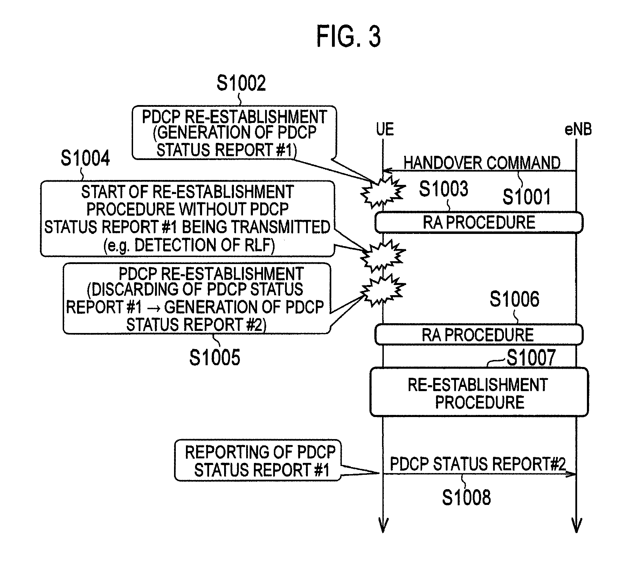

Operations of the mobile communication system of the embodiment are described below with reference to Figs. 3 and 4.

First, the operations of the mobile communication system in the embodiment are described with reference to Fig. 3.

As shown in Fig. 3, when the mobile station UE receives the "handover command" from the radio base station eNB in step S1001, the mobile station UE detects the start trigger for the "PDCP re-establishment", starts the "PDCP re-establishment procedure", and generates the "PDCP status report #1" in step S1002.

In step S1003, the mobile station UE starts a RA procedure with the radio base station eNB.

Before the RA procedure is completed, the mobile station UE yet to transmit the "PDCP status report #1" detects the start trigger for the "PDCP re-establishment" (for example, RLF) again in step S1004. Then, in step S1005, the mobile station UE starts the "PDCP re-establishment procedure", discards the "PDCP status report #1", and generates the "PDCP status report #2".

The mobile station UE starts the "RA procedure" with the radio base station eNB in step S1006 and, when succeeding in the RA procedure, starts the "PDCP re-establishment procedure" with the radio base station eNB in step S1007.

When succeeding in the "PDCP re-establishment procedure", the mobile station UE transmits the "PDCP status report #2" in step S1008.

Secondly, operations of the mobile station UE in the embodiment are described with reference to Fig. 4.

As shown in Fig. 4, when the mobile station UE detects the start trigger for the "PDCP re-establishment" (for example, RLF) in step S101, the mobile station UE determines in step S102 whether the mobile station UE holds a "PDCP status report" which is not transmitted yet.

If "YES", the operation proceeds to step S103. If "NO", the operation proceeds to step S104.

In step S103, the mobile station UE discards the held "PDCP status report".

In step S104, the mobile station UE generates a new "PDCP status report" and transmits the new "PDCP status report" to the radio base station eNB.

In the mobile communication system of the embodiment, the mobile station UE is configured to generate only the latest "PDCP status report" for the radio base station eNB. Accordingly, it is possible to avoid a situation where PDCCH and PUSCH resources for transmitting the "PDCP status report" are wasted.

The features of the present embodiment may also be expressed as follows.

A first feature of the present embodiment is summarized as a mobile communication method including the steps of: causing a mobile station UE to generate "PDCP status report #1 (first PDCP status report)" when detecting a start trigger for "PDCP re-establishment procedure (re-establishment procedure in a PDCP layer) "; causing the mobile station UE to discard the "PDCP status report #1" and generate "PDCP status report #2 (second PDCP status report)", when detecting the start trigger for the "PDCP re-establishment" again before completing transmission of the "PDCP status report #1"; and causing the mobile station UE to transmit the "PDCP status report #2" to a radio base station eNB after completing the "PDCP re-establishment".

A second feature of the present embodiment is summarized as a mobile station UE including: a generation unit 11 configured to generate "PDCP status report" when a start trigger for "PDCP re-establishment procedure" is detected; and a transmission unit 12 configured to transmit the "PDCP status report" to a radio base station eNB after the "PDCP re-establishment procedure" is completed. Here, when the start trigger for the "PDCP re-establishment procedure" is detected again before transmission of a generated "PDCP status report #1" is completed, the generation unit 11 discards the "PDCP status report #1" and generates "PDCP status report #2", and the transmission unit 12 transmits the second PDCP status report to the radio base station eNB after the "PDCP re-establishment procedure" is completed.

It should be noted that the foregoing operations of the mobile stations UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE and the radio base station eNB. Otherwise, the storage medium and the processor may be provided as discrete components inside the mobile stations UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-259521 (filed on November 28, 2012) is incorporated by reference in the present specification.

### INDUSTRIAL APPLICABILITY

As described above, the present invention can provide a mobile communication method and a mobile station which can avoid a situation where PDCCH and PUSCH resources for transmitting the "PDCP status report" are wasted, even when the "PDCP re-establishment procedure" is started.

### EXPLANATION OF THE REFERENCE NUMERALS

- eNB: radio base station
- UE: mobile station
- 11: generation unit
- 12: transmission unit

## Claims

1. A mobile communication method comprising the steps of:
causing a mobile station to generate a first PDCP status report when detecting a start trigger for a re-establishment procedure in a PDCP layer;
causing the mobile station to discard the first PDCP status report and generate a second PDCP status report, when detecting the start trigger for the re-establishment procedure in the PDCP layer again before completing transmission of the first PDCP status report; and
causing the mobile station to transmit the second PDCP status report to a radio base station after completing the re-establishment procedure in the PDCP layer.

2. A mobile station comprising:
a generation unit configured to generate a PDCP status report when a start trigger for a re-establishment procedure in a PDCP layer is detected; and
a transmission unit configured to transmit the PDCP status report to a radio base station after the re-establishment procedure in the PDCP layer is completed, wherein
when the start trigger for the re-establishment procedure in the PDCP layer is detected again before transmission of a generated first PDCP status report is completed, the generation unit discards the first PDCP status report and generates a second PDCP status report, and
the transmission unit transmits the second PDCP status report to the radio base station after the re-establishment procedure in the PDCP layer is completed.
